# EUROPÄISCHE PATENTSCHRIFT

(11) **EP 3 851 716 B1**
(45) Veröffentlichungstag und Bekanntmachung des Hinweises auf die Patenterteilung: **10.09.2025**
(21) Anmeldenummer: 21152006.9
(22) Anmeldetag: 18.01.2021
(51) Int. Cl.: F16K 7/12, F16K 7/17, F16K 37/00

(54) **VERFAHREN ZUR PRUEFUNG DES VERSCHLEISSZUSTANDES EINER MEMBRAN**
METHOD FOR DETERMINING THE WEAR STATE OF A MEMBRANE
PROCÉDÉ DE VÉRIFICATION DE L'ÉTAT D'USURE D'UNE MEMBRANE

(30) Priorität: 20.01.2020 DE 102020101181
(43) Veröffentlichungstag der Anmeldung: 21.07.2021
(73) Patentinhaber: SISTO Armaturen S.A., 6468 Echternach (LU)
(72) Erfinder: SCHAAL, Andreas, 6468 Echternach (LU)
(74) Vertreter: Busch, Tobias

(56) Entgegenhaltungen:
- EP-A1- 3 303 889
- EP-A1- 3 303 891
- EP-A1- 3 415 759
- EP-A2- 1 726 855
- WO-A1-2017/140418
- WO-A1-2019/106960
- DE-A1- 102009 023 012
- DE-A1- 102015 219 273
- DE-A1- 19 829 084

## Beschreibung

Membranventile können zur Dosierung von unterschiedlichen Fluiden eingesetzt werden, beispielsweise von Gasen, Dämpfen oder Flüssigkeiten. Beispielgebend können Membranventile eingesetzt werden, um hochviskose bzw. sehr stark haftfähige Medien zu dosieren bzw. zu verteilen. Bei Membranventilen wird dabei wirksam eine Ablagerung und somit auch eine Kontamination verhindert. Ventile auf Basis des Membranprinzips sind die totraumärmsten Dosierarmaturen. Neben dem sehr geringen Totraumvolumen sind Membranventile zudem entleerungsoptimiert konstruiert, sodass eine rückstandsfreie Entfernung des Mediums ermöglicht wird.

Dies ist insbesondere bei pharmazeutischen Anlagen und Fertigungsprozessen von großer Bedeutung, da diese den hohen Ansprüchen einer strengen Validierung unterliegen, mit dem Ziel, eine gleichbleibende und reproduzierbare Qualität zu gewährleisten. Aus diesen Ansprüchen resultiert die Notwendigkeit, verschiedene Prozesse innerhalb einer Anlage fahren zu können. Neben dem eigentlichen Produktionsprozess sind dies in der Regel die Reinigung, Desinfektion und Sterilisation der Anlage. Membranventile haben sich aufgrund ihrer vorteilhaften Konstruktionsmerkmale als bevorzugte Armatur in der sterilen Prozesstechnik etabliert.

Die eingesetzten Membranen bilden bewegliche, dichtende Wände, die zwei Räume mit in der Regel unterschiedlichen Medien (Gase, Flüssigkeiten) und häufig auch unterschiedlichen Druckverhältnissen voneinander trennen.

Ein wichtiges Qualitätsmerkmal einer Membran ist deren Beweglichkeit, das heißt die Fähigkeit senkrecht zur Einspannfläche (Membranfläche) einen Hub auszuführen, der mechanisch angetrieben bedingt sein kann. Weiterhin ist die Beständigkeit der Membran von Bedeutung, insbesondere wenn aggressive Medien gefördert werden.

Die Bewegungsfähigkeit und Beständigkeit einer Membran hängen im Wesentlichen vom Werkstoff ab, aus dem die Membran besteht. Als Grundwerkstoffe für Membranen werden hauptsächlich Elastomere verwendet, die zur Erzielung einer höheren Festigkeit mit Gewebeeinlagen verstärkt werden können. Als Elastomere haben sich Membranen mit Ethylen-Propylen-Dien-Kautschuk (EPDM) bewährt. Bei Ethylen-Propylen-Dien-Kautschuk (EPDM) handelt es sich um terpolymere Elastomere (Gummi) und somit um synthetische Kautschuke. Das Material zeichnet sich durch eine hohe Elastizität und gute chemische Beständigkeit aus.

Wenn Membranen in einem zugehörigen Membranventil verbaut sind, sind diese nicht mehr von außen sichtbar. Um den Alterungs- und Verschleißzustand zu beobachten sowie zu beurteilen, müssen üblicherweise die Anlagen und Maschinen, in denen die Membranventile verbaut sind, außer Betrieb gesetzt werden, um das Membranventil zur Inspektion zu öffnen. Dies führt zu erheblichen Anlagenstillständen mit entsprechenden Produktionsausfallzeiten.

In der DE 10 2015 210 210 A1 ist ein Verfahren zur Diagnose eines Membranventils beschrieben, bei dem die optische Beschaffenheit der Membran ausschlaggebende Größe zur Bestimmung der Restlebensdauer einer Membran ist. Für eine hohe Anlagenverfügbarkeit mit hoher Produktionszeit ist die optische Inspektion beim geöffneten Membranventil extrem nachteilig, da es zu hohen Ausfallzeiten führt.

Die EP 2 984 533 B1 beschreibt den Einsatz von Sensoren an einem Membranventil zu Ermittlung des Betriebszustandes und ein Verfahren zu dessen Auswertung. Mit einem solchen System lässt sich jedoch noch keine Aussage über den Verschleißzustand eines Membranventils treffen. Die Abschätzung der Restlebensdauer einer Membran und die Vermeidung von ungeplanten Anlagenstillständen wegen Membranausfall ist hierdurch nicht möglich.

Die EP 1 726 855 A2 offenbart ein Ventil mit integriertem Lecksensor zur Verwendung in Verbindung mit automatischen Fütterungsanlagen im landwirtschaftlichen Bereich. Das Ventil enthält eine Sensoreinheit zum Erkennen einer Undichtigkeit in der Membran des Ventils.

Die EP 3 303 891 B1 beschreibt Verfahren zur Diagnose eines Membranventils, bei der eine erste Größe, welche eine Ventilmembran charakterisiert, mindestens eine zweite Größe, welche das Membranventil oder mindestens eine seiner Komponenten, die nicht die Ventilmembran sind, charakterisiert, und mindestens eine dritte Größe, welche einen Betrieb des Membranventils charakterisiert, an eine Ermittlungseinrichtung übermittelt. Die Einrichtung ermittelt einen aktuellen Zustand der Ventilmembran.

In der DE 10 2009 023 012 A1 wird eine Membrane für Membranventile beschrieben, die erst dann ausgewechselt werden muss bzw. ausgewechselt werden kann, bevor tatsächlich ein Defekt auftritt. Dazu weist die Membrane einen Sensor auf.

Die DE 10 2015 219273 A1 zeigt ein Verfahren zur Prüfung des Verschleißzustandes einer Schlauchmembran während des Betriebes wobei die Änderungsgeschwindigkeit einer Antriebsgröße zur Prüfung des Verschleißzustandes herangezogen wird und wobei es sich bei der Antriebsgröße um einen Druck zur pneumatischen Verformung der Membran handelt.

Aufgabe der Erfindung ist es, ein Verfahren und eine Membran bereitzustellen, um eine Prüfung des Verschleißzustandes der Membran vornehmen zu können, ohne das Membranventil außer Betrieb nehmen zu müssen. Der Betrieb des Membranventils sollte durch ein solches Verfahren nicht beeinträchtigt werden. Das Verfahren soll möglichst problem- sowie unterbrechungsfrei laufen und sicher den Verschleißzustand bestimmen können. Die Membran soll sich auf möglichst preiswerte sowie besonders einfache Weise und mit einem möglichst geringen Materialausschuss herstellen lassen. Dabei soll sich die Membran durch eine hohe Lebensdauer und möglichst geringe Herstellungskosten auszeichnen.

Diese Aufgabe wird erfindungsgemäß durch ein Verfahren zur Prüfung des Verschleißzustandes sowie einer Membran gemäß den nebengeordneten Ansprüchen gelöst. Bevorzugte Varianten sind den Unteransprüchen, der Beschreibung und den Zeichnungen zu entnehmen.

Erfindungsgemäß erfolgt die Prüfung während des Betriebes, wobei die Änderungsgeschwindigkeit einer Antriebsgröße zur Prüfung des Verschleißzustandes herangezogen wird, wobei es sich bei der Antriebsgröße um einen Druck und/oder eine Kraft zur pneumatischen Verformung der Membran (5) handelt, wobei das Vorzeichen der Änderungsgeschwindigkeit der Antriebsgröße zur Prüfung des Verschleißzustandes und die Zeitdifferenz zwischen zwei Vorzeichenänderungen der Änderungsgeschwindigkeit der Antriebsgröße zur Prüfung des Verschleißzustandes durch Abgleich von Kraft-Dehnungsverläufen und/oder zeitlichen Druckverläufen mit Referenzverläufen in einer zentralen Auswerteeinheit herangezogen wird.

Am Steuerluftanschluss der Pneumatikeinheit eines Membranventils wird eine Sensoranordnung angeschlossen. Dadurch ist der pneumatische Antrieb, insbesondere mindestens einer Antriebsgröße, eines Membranventils überwachbar. Die Überwachung durch mindestens einen Sensor bezieht sich auf den Druck genauso wie auf die Erkennung von Fehlzuständen. Damit wird bei pneumatisch angetriebenen Membranventilen eine Funktionsüberwachung, vorbeugende Instandhaltung und Energie-monitoring ermöglicht. Integraler Bestandteil der Erfindung ist die drahtlose Kommunikation durch das Mittel zum Datenaustausch im Sinne des Internet der Dinge, speziell des industriellen Internet der Dinge, die eine einfache, flächendeckende Installation ermöglicht.

In einer vorteilhaften Ausgestaltung der Erfindung werden die Prozess- und Zustandsgrößen mittels mindestens einem Sensor erfasst. Als Sensoren bieten sich in vorteilhafter Weise Sensoren zur Erfassung von Schwingungen, Schall, Durchfluss, insbesondere Druck und/oder Kraft an, die zur Verformung der Membran eingesetzt werden. Diese stellen die wesentlichen Prozess- und Zustandsgrößen in einem Pneumatiksystem dar, aus denen sich Rückschlüsse auf den Zustand des Systems ziehen lassen. In ganz besonderer Weise lassen sich anhand des zeitlichen Verlaufes des Drucks, Aussagen zum Verschleißzustand der eingebauten Membran treffen. Die vorgenannten Messwerte können von jeweils einem Sensor für einen Messwert oder einem gemeinsamen Sensor, beispielsweise einer sogenannten IMU (integrated measurement unit) erfasst werden.

Gemäß der Erfindung lässt sich anhand des zeitlichen Verlaufes der Antriebsgröße Druck und/oder des Kraftverlaufs, aber auch der Änderungsgeschwindigkeit sowie der Vorzeichen der Änderungsgeschwindigkeit als auch der Zeitdifferenz zwischen Vorzeichenänderungen der Änderungsgeschwindigkeit und auch dem Maximum der Antriebsgröße der Verschleißzustand einer Membran bestimmen. Zur Analyse kann der Kraft-Dehnungs-Verlauf und/oder der Kraft-Zeit-Verlauf herangezogen werden.

In einer besonders vorteilhaften Variante der Erfindung weist der zeitliche Verlauf der Antriebsgröße Druck ein lokales Maximum während der pneumatischen Verformung auf, welches mit zunehmendem Verschleiß abnimmt. Kurz vor Ablauf der Restlebensdauer der Membran weist der zeitliche Verlauf der Antriebsgröße Druck dieses lokale Maximum nicht mehr auf.

Erfindungsgemäß zeigt das Kraft-Dehnungs-Diagramm eine ausgeprägte Hysteresearbeit während einer kompletten Verformung, welche mit zunehmendem Verschleiß abnimmt. Kurz vor Ablauf der Restlebensdauer ist die Hysteresearbeit der Membran auf ein geringes Niveau gesunken. Weiterhin zeigt das Kraft-Dehnungsdiagramm ein lokales Maximum während der Verformung der Membran, welches mit zunehmendem Verschleiß der Membran nicht mehr nachgewiesen werden kann.

In einer weiteren Ausgestaltung der Erfindung ist das Mittel zur Datenübertragung ein Funkkommunikationsmittel, insbesondere ein Nahfeldfunkmittel. Die drahtlose Kommunikation ist integraler Bestandteil der am Antrieb angeschlossenen Sensoranordnung. Diese weist sowohl eine Nahfeld-Kommunikation über RFID, Bluetooth LE, Thread, Zigbee oder Ähnlichem auf, als auch eine Fernfeld-Kommunikation über WiFi, LPWan oder Mobilfunk-Standards wie GSM, LTE oder Ähnlichem. Um die Sicherheit der Datenübertragung zu gewährleisten und deren Datenübertragungsrate zu erhöhen, können auch mehrere Technologien kombiniert sein.

Vorteilhafterweise erfolgt die Energieversorgung bei dem Datenerfassungs- und Kommunikationssystem kabellos beispielsweise über eine Versorgungsbatterie. Es ist jedoch auch denkbar, dass die Datenerfassungseinheit die benötigte Energie aus der Funkschnittstelle entnimmt. Weiterhin kann eine Eigenversorgung der Überwachungseinheit durch Energy Harvesting realisiert sein. Zur Energiegewinnung werden beispielsweise Temperaturunterschiede zwischen Steuerluft und Umgebungsluft, Vibrationen oder die Ventilbewegung selbst genutzt.

Eine besonders geeignete Möglichkeit ist die Energiegewinnung aus der beim Schalten des Ventils durchströmenden Druckluft, die eine in die Überwachungseinheit integrierte Turbine antreibt und mit einem Generator die Versorgungsenergie für die Elektronik bereitstellt. Eine eingebaute Batterie oder Akku dienen dazu, lange Phasen ohne Energiegewinnung zu überbrücken. Gleichzeitig kann bei dieser Variante die Drehzahl der Turbine als Durchflusssensor genutzt werden.

Die drahtlose Datenübertragung und die kabellose Energieversorgung ermöglicht die einfache, flächendeckende Installation in industriellen Anlagen. In einer einfachen Ausführung der Erfindung ist es vorstellbar, dass die Daten- und/oder Energieversorgung kabelgebunden erfolgt.

Ein Vorteil dieser Erfindung ist der einfache und nachträgliche Einbau der Sensoranordnung oder mindestens einer Überwachungseinheit am Steuerluftanschluss des Antriebs, welcher durch standardisierte Anschlussgewinde unkompliziert ausgeführt werden kann. Die Überwachungseinheit besitzt zwei pneumatische Anschlüsse, einen Versorgungsanschluss und einen Verbraucheranschluss, wobei es auch mehrere Verbraucheranschlüsse geben kann. In einer Ausführung besitzt die Überwachungseinheit am Verbraucheranschluss ein Außengewinde, das direkt in einen pneumatischen Antrieb eingeschraubt werden kann.

In einer Ausgestaltung des Verfahrens werden die erfassten Daten in einer Auswerteeinheit ausgewertet und das Auswerteergebnis durch die Mittel zur Datenübertragung an eine zentrale Steuereinheit übertragen. Dies hat den Vorteil, dass die Menge der zu übertragenden Daten reduziert wird.

In einer weiteren Ausgestaltung des Verfahrens werden in der Auswerteeinheit Anomalien gegenüber einem hinterlegten Verhalten erfasst. In der Auswerteeinheit sind Zustände oder Betriebsverläufe mindestens einer Antriebsgröße, insbesondere Druck und/oder Kraft, der Membran hinterlegt. Dies ermöglicht eine konkrete Rückmeldung hinsichtlich des Verschleißzustandes und kann dazu genutzt werden, einen notwendigen Membranwechsel anzuzeigen.

Ein Verfahren zur Herstellung einer Membran kann sich in aufeinander folgende Fertigungsschritte gliedern. Dabei werden zunächst EPDM-Lagen aus kalandrierten Bahnen im Membranformat ausgeschnitten. An jede Lage wird an einer Seite ein Fortsatz mit ausgeschnitten, der über den späteren Funktionsausschnitt der Membran herausragen wird. Die EPDM-Lagen werden vorteilhafterweise in ein Formnest aufeinander gebettet, so dass die Fortsätze einheitlich übereinander angeordnet sind. Zwischen den Lagen wird zur Stabilisierung der Membran eine Verstärkungselement, insbesondere eine Gewebelage eingefügt und zusätzlich kann eine Membranschraube angeordnet werden. Anschließend wird das Formnest verschlossen und die Vulkanisation unter üblichen Temperatur- sowie Druckbedingungen durchgeführt.

Bei einer besonders vorteilhaften Variante variieren dabei die Querschnitte der fadenartigen Verstärkungselemente.

Vorteilhafterweise bestehen die Verstärkungsanordnungen in solchen Membranen aus einer Gewebeeinlage, bei der die fadenartigen Elemente rechtwinklig zueinander ausgerichtet sind. Vorteilhafterweise können bei der erfindungsgemäßen Membran die fadenartigen Elemente in radialer Richtung ausgerichtet werden, sodass sie auf einen zentralen Verformungspunkt zulaufen. In dem zentralen Verformungspunkt ist ein stiftartiges Element zur Bewegung der Membran angeordnet.

Ergänzend oder alternativ kann die Verstärkungsanordnung fadenartige Elemente aufweisen, die sich in konzentrischen Kreisen um den zentralen Verformungspunkt der Membran erstrecken.

Bei einer Variante weisen die fadenartigen Elemente einen spiralförmigen bzw. schneckenförmigen Verlauf auf, ausgehend vom zentralen Verformungspunkt der Membran nach außen.

Bei einer Variante erweisen sich Gewebeeinlagen, die insbesondere Polymere auf Polyamid- und/oder Nylon- und/oder Aramidbasis aufweisen, als vorteilhaft.

Vorteilhafterweise wird zwischen zwei Elastomer-Lagen eine Verstärkungsschicht angeordnet. Die Verstärkungsschicht weist vorzugsweise eine höhere Steifigkeit gegenüber den Elastomer-Lagen aus. Vorzugsweise handelt es sich bei der Verstärkungsschicht um eine faserverstärkte Lage. Dabei kann es sich um eine Gewebelage aus Fasern handeln oder um eine faserverstärkte Gummilage.

Vorteilhafterweise erfolgt anschließend eine Vulkanisation der Elastomer-Lagen mit der Gewebeeinlage. Vorzugsweise werden bei der Vulkanisation die Elastomer-Lagen, die neben Ethylen-Propylen-Dien-Kautschuk (EPDM) peroxidvernetzendes EPDM eingesetzt. Alternativ können auch Schwefel bzw. aus Schwefel verwertete Stoffe, wie zum Beispiel Schwefeldifluorid, Katalysatoren bzw. Zinkoxid oder Fettsäuren enthalten sein, wie auch mit Feststoffen verwertet sein können, erhitzt. Die Vulkanisation erfolgt meist mit einem Schwefelanteil von 1,8 bis 2,5 Gew.-% und einer Temperatur von ca. 120 bis 160°C. Dabei werden die langkettigen Kautschukmoleküle durch Schwefelbrücken vernetzt. Hierdurch gehen die plastischen Eigenschaften des Kautschuks bzw. der Kautschukmischung verloren und der Stoff wird mittels des Verfahrens der Vulkanisation vom plastischen in den elastischen Zustand überführt. In der Regel ist die Elastizität des Gummiwerkstoffs abhängig von der Anzahl der Schwefelbrücken. Je mehr Schwefelbrücken vorhanden sind, desto härter ist der Gummi. Die Anzahl der Schwefelbrücken ist wiederum abhängig von der zugesetzten Schwefelmenge und der Dauer der Vulkanisation.

Die EPDM-Lagen, die im Compression-Moulding-Verfahren zur Membran vulkanisiert werden, können vorteilhafterweise sehr dünn ausgeführt sein. So ist durchaus möglich, dass die Lagen nur 0,5 - 5 mm betragen.

Als besonders günstig erweist es sich, wenn bei der Membrananordnung ein stiftartiges Element formschlüssig in eine Lage integriert wird. Bei dem stiftartigen Element kann es sich um eine Membranschraube handeln. Die Membranschraube kann beispielsweise über eine Spindel mit einem Antrieb verbunden sein. Auf diese Weise kann die Membran verformt werden.

Weitere Merkmale und Vorteile der Erfindung ergeben sich aus der Beschreibung von Ausführungsbeispielen anhand von Zeichnungen und aus den Zeichnungen selbst.

Dabei zeigt:
- Figur 1: eine Sensoranordnung,
- Figur 2: ein Membranventil mit einer Sensoranordnung
- Figur 3: eine Schnittdarstellung einer gewebeverstärkten Membran
- Figur 4a: eine Darstellung des zeitlichen Druckverlaufes einer neuen Membran während einer Membranverformung
- Figur 4b: eine Darstellung des zeitlichen Druckverlaufes einer Membran kurz vor der Verschleißgrenze während einer Membranverformung
- Figur 5a: eine Darstellung des Kraft-Dehnungsverhaltens einer neuen Membran während einer Membranverformung
- Figur 5b: eine Darstellung des Kraft-Dehnungsverhaltens einer Membran kurz vor der Verschleißgrenze während einer Membranverformung

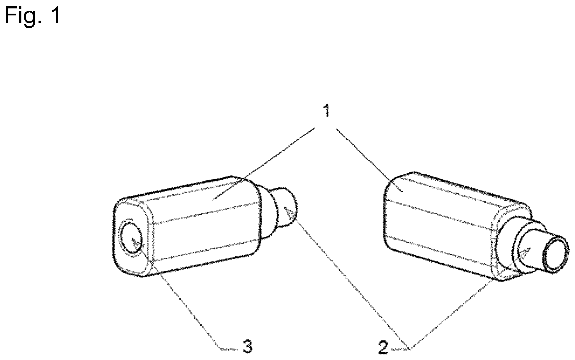

Figur 1 zeigt eine Sensoranordnung 1 zur Ermittlung von Prozess- und/oder Zustandsgrößen, der mit einer Schnittstelle 2 zur Verbindung mit der Pneumatikeinrichtung. und somit zum Kontakt mit dem zu messenden Medium ausgestattet ist. Über eine Schnittstelle 3 kann ein Steuermedium, beispielsweise Druckluft, angeschlossen werden. Als Prozess- oder Zustandsgrößen sind Temperatur, Feuchte, Druck, Kraft, Schall oder Vibrationen/Schwingungen, Fließgeschwindigkeit oder Lichtabsorption feststellbar. Die Sensoranordnung 1 ist hierfür mit einem oder mehreren entsprechenden Mitteln zur Datenerfassung ausgestattet. Weiter kann die Sensoranordnung 1 mit einer nicht dargestellten Datenschnittstelle ausgestattet sein, die eine Weitergabe der Messdaten ermöglicht. Hierbei kann es sich um eine Anzeige der Messwerte handeln. Ebenso kann eine kabelgebundene oder drahtlose Weitergabe der Messdaten an eine weiterverarbeitende Einheit über diese Schnittstelle erfolgen.

Eine Anzeige kann von einer einfachen digitalen AN/AUS Darstellung bis hin zu vollumfänglichen Messwertangaben inklusive Zeitreihen vorgesehen sein. Wichtiger wird bei dieser Sensoranordnung aber eine Weitergabe der Daten an eine übergeordnete Datenverarbeitungseinheit sein. Dazu werden die Daten in der Sensoranordnung 1 eventuell noch durch Filter aufbereitet und dann weitergeleitet. Hierzu bietet sich als einfachste Möglichkeit eine kabelgebundene Übertragung an. Dies hätte den Vorteil, dass die Verbindung einfach und kostengünstig ausgestaltet ist. Weiter ist eine Energieversorgung der Sensoranordnung 1 kabelgebunden möglich. Speziell in sicherheitskritischen Bereichen ist die kabelgebundene Kommunikation sehr unempfindlich.

Mit geeigneten Mitteln ist es aber auch möglich, die Sensoranordnung 1 per Funkübertragung zu betreiben. Hierfür ist der Aufwand bei der Verkabelung geringer.

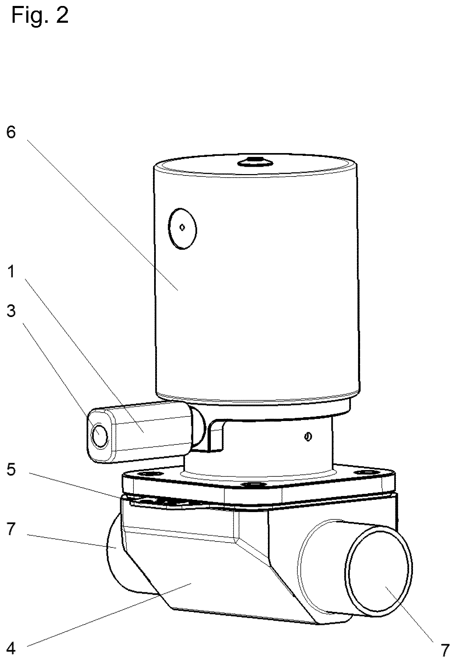

Die Figur 2 zeigt ein Membranventil 4 mit Anschlüssen 7, wobei ein Einlass und ein Auslass vorgesehen sind. Das Membranventil verfügt über eine Membran 5, die mittels einer Pneumatikeinheit 6 bewegt wird. Die Zu- und Ablaufleitungen der Pneumatikeinheit 6 sind in der Figur 2 nicht dargestellt. An der Pneumatikeinheit 6 ist eine Sensoranordnung 1 erfindungsgemäß vorgesehen.

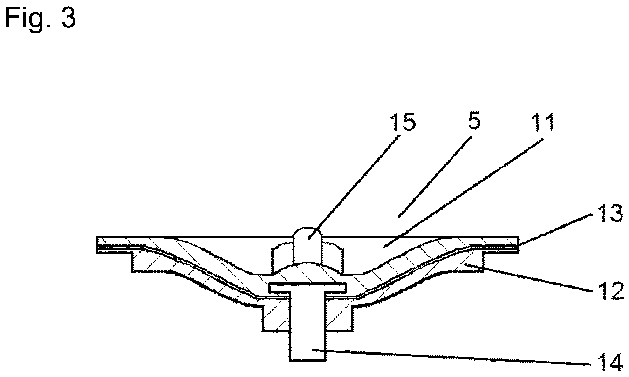

Figur 3 zeigt eine Schnittdarstellung einer Membran 5. Die Membran 5 umfasst eine erste Lage 11, die auf der Mediumseite angeordnet ist. Weiterhin umfasst die Membran 5 eine zweite Lage 12, welches die Rückseite der Membrananordnung bildet. Die beiden Lagen 11 und 12 sind aus einem Elastomer, insbesondere EPDM, gefertigt. Zwischen den beiden EPDM-Lagen 11, 12 ist eine Gewebe-Einlage 13 angeordnet. Weiterhin umfasst die Membran 5 ein stiftartiges Element 14, das im Ausführungsbeispiel als Membranschraube ausgebildet ist.

Die erste Lage der Membran 5, die der Mediumseite zugeordnet ist, weist eine Dichtlippe 15 auf. Das stiftartige Element 14 kann ein Gewinde aufweisen. Das stiftartige Element 14 ist als Membranschraube ausgebildet und weist ein Außengewinde auf, das in ein Innengewinde eingeschraubt wird, welches in einem Druckstück 10 ausgebildet ist. Bei der Membran 5 handelt es sich um ein Compound aus mindestens zwei EPDM-Lagen 11, 12 und einer dazwischen angeordneten Gewebe-Einlage 13, die durch Vulkanisation, beispielsweise über das Compression-Moulding-Verfahren, miteinander verbunden sind.

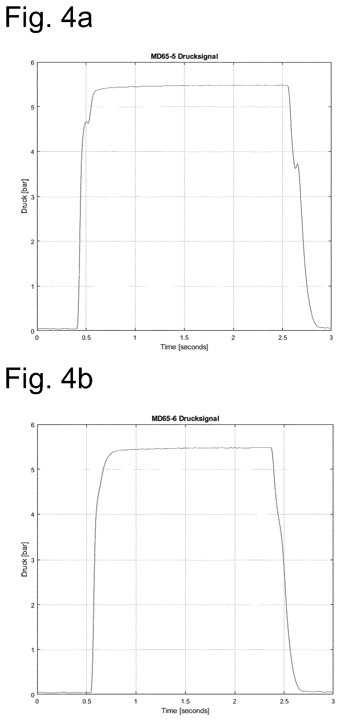

Figur 4a zeigt eine Darstellung des zeitlichen Druckverlaufes einer neu eingebauten Membran während einer Membranverformung. Aufgetragen ist der Druck in der Einheit Bar über der Zeit in Sekunden. Während der Membranverformung steigt der Druck stark an, dabei wird der Anstieg kurzzeitig beim Durchlaufen eines lokalen Maximums unterbrochen. Die Änderungsgeschwindigkeit des Druckverlaufes ändert kurzzeitig das Vorzeichen bevor der Druckverlauf ein globales Maximum erreicht. Bei der Verformung in die entgegengesetzten Richtung fällt der Druck steil ab. Dieser Druckabfall wird kurzzeitig beim Durchlaufen eines lokalen Maximums unterbrochen. Die Änderungsgeschwindigkeit ändert zwischen dem lokalen Minimum bis zum lokalen Maximum das Vorzeichen bis der Druck stark abfällt, bis er nahezu 0 bar erreicht.

Figur 4b zeigt den zeitlichen Verlauf des Druckes während einer Membranverformung einer Membran am Ende ihrer Lebensdauer. Aufgetragen ist der Druck in der Einheit Bar über der Zeit in Sekunden. Der Druck steigt während der Verformung stark an und erreicht ein Maximum. Bei der entgegengesetzten Verformung fällt der Druck steil ab, bis er nahezu 0 bar erreicht. Durch Abgleich der zeitlichen Druckverläufe mit mindestens den Referenzverläufen aus Figur 4a und b in der zentralen Auswerteeinheit, lässt sich der Verschleißzustand prüfen und bestimmen.

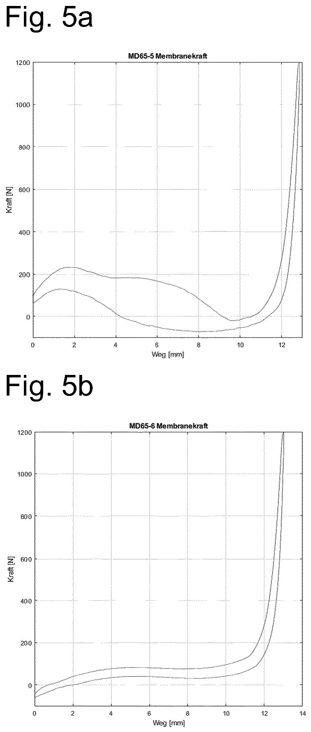

Figur 5a zeigt eine Darstellung des Kraft-Dehnungsverlaufes einer neu eingebauten Membran, während einer Membranverformung. Aufgetragen ist die Kraft in der Einheit Newton über dem Dehnungsweg in der Einheit Millimeter. Die obere Kurve zeigt den Schließvorgang der Membran während die untere Kurve den Öffnungsverlauf zeigt. Während des Schließvorganges der Membran steigt die Kraft an, fällt innerhalb des Dehnungsweges von 2 bis 10 mm leicht ab und steigt ab 10 mm Dehnungsweg sehr stark an. Während des Öffnungsvorganges fällt die Kraft stark ab und steigt innerhalb des Dehnungsweges von 10 bis 2 mm leicht an, um ab 2 mm Dehnungsweg stark abzufallen. Der Bereich zwischen den zwei Kurven wird Hysteresearbeit genannt.

Figur 5b zeigt eine Darstellung des Kraft-Dehnungsverlaufes einer Membran am Ende ihrer Lebensdauer, während einer Membranverformung. Aufgetragen ist die Kraft in der Einheit Newton über dem Dehnungsweg in der Einheit Millimeter. Die obere Kurve zeigt den Schließvorgang der Membran während die untere Kurve den Öffnungsverlauf zeigt. Während des Schließvorganges steigt die Kraft leicht an bis etwa einen Dehnungsweg von 4 mm erreicht wird. Innerhalb des Dehnungsweges von 4 bis 10 mm ist die Kraft konstant. Ab 10 mm Dehnungsweg steigt die Kraft sehr stark an. Während des Öffnungsvorganges fällt die Kraft stark ab bis etwa 10 mm Dehnungsweg erreicht ist. Im Bereich von 10 mm bis 4 mm Dehnungsweg ist die Kraft konstant. Ab 4 mm Dehnungsweg fällt die Kraft wieder leicht ab. Durch Abgleich der Kraft-Dehnungsverläufe mit mindestens den Referenzverläufen aus Figur 5a und b, insbesondere unter Berücksichtigung der Hysteresearbeit, in der zentralen Auswerteeinheit, lässt sich der Verschleißzustand prüfen und bestimmen.

## Patentansprüche

1. Verfahren zur Prüfung des Verschleißzustandes einer Membran (5), wobei die Prüfung während des Betriebes erfolgt, wobei die Änderungsgeschwindigkeit einer Antriebsgröße zur Prüfung des Verschleißzustandes herangezogen wird, wobei es sich bei der Antriebsgröße um einen Druck und/oder eine Kraft zur pneumatischen Verformung der Membran (5) handelt,
**dadurch gekennzeichnet, dass** das Vorzeichen der Änderungsgeschwindigkeit der Antriebsgröße zur Prüfung des Verschleißzustandes und die Zeitdifferenz zwischen zwei Vorzeichenänderungen der Änderungsgeschwindigkeit der Antriebsgröße zur Prüfung des Verschleißzustandes durch Abgleich von Kraft-Dehnungsverläufen und/oder zeitlichen Druckverläufen mit Referenzverläufen in einer zentralen Auswerteeinheit herangezogen wird.

2. Verfahren nach Anspruch 1, **dadurch gekennzeichnet, dass** ein Maximum der Antriebsgröße zur Prüfung des Verschleißzustandes herangezogen wird.

## Claims

1. Method for checking the wear state of a diaphragm (5), wherein the checking is carried out during operation, wherein the rate of change of a drive variable is used for checking the wear state, wherein the drive variable is a pressure and/or a force for pneumatically deforming the diaphragm (5),
**characterized in that** the sign of the rate of change of the drive variable is used for checking the wear state and the time difference between two changes in the sign of the rate of change of the drive variable is used for checking the wear state by comparison of force-displacement profiles and/or temporal pressure profiles with reference profiles in a central evaluation unit.

2. Method according to Claim 1, **characterized in that** a maximum of the drive variable is used for checking the wear state.

## Revendications

1. Procédé de contrôle de l'état d'usure d'une membrane (5), le contrôle étant effectué pendant le fonctionnement, la vitesse de variation d'une variable d'entraînement étant prise en compte pour le contrôle de l'état d'usure, la variable d'entraînement étant une pression et/ou une force de déformation pneumatique de la membrane (5),
**caractérisé en ce que** le signe de la vitesse de variation de la variable d'entraînement est pris en compte pour le contrôle de l'état d'usure et la différence de temps entre deux variations de signe de la vitesse de variation de la variable d'entraînement est prise en compte pour le contrôle de l'état d'usure par comparaison de courbes de force-allongement et/ou de courbes de pression dans le temps à des courbes de référence dans une unité d'évaluation centrale.

2. Procédé selon la revendication 1, **caractérisé en ce qu'**un maximum de la variable d'entraînement est pris en compte pour le contrôle de l'état de l'usure.
